# EUROPEAN PATENT APPLICATION

(11) **EP 3 226 048 A1**
(43) Date of publication of application: **04.10.2017**
(21) Application number: 16176636.5
(22) Date of filing: 28.06.2016
(51) Int. Cl.: G02B 6/44

(54) **OPTICAL FIBER CABLE FOR BLOWING INTO DUCTS**

(30) Priority: 29.03.2016 IN 201621010854
(71) Applicant: Sterlite Technologies Ltd, Maharashtra 431 136 (IN)
(72) Inventor: KUMAR, Sravan, 500039 Telangana (IN); SRIVASTAVA, Shivam, Madhya Pradesh (IN); LIU, Buddy, Nanjing, 210032 (CN)
(74) Representative: Browne, Robin Forsythe

(57) **Abstract**

Disclosed is an optical fiber cable (100). The optical fiber cable (100) includes a central strength member (105). The central strength member (105) lies substantially along a longitudinal axis of the optical fiber cable (100). In addition, the optical fiber cable (100) includes one or more buffer tubes (110a-110f) stranded around the central strength member (105). Moreover, the optical fiber cable (100) includes a first layer (120). The first layer (120) surrounds the one or more buffer tubes (110a-110f). Further, the optical fiber cable (100) includes a second layer (125). The second layer (125) surrounds the first layer (120). Each of the one or more buffer tubes (110a-110f) encloses 16 optical fibers (115). The optical fiber cable (100) has an outer diameter in a range of 5.6 - 6.0 millimeters and a weight of about 33 kilograms per kilometer.

## Description

### TECHNICAL FIELD

The present application in based on, and claims priority from an Indian application number 201621010854 filed on 29th March, 2016. The present disclosure relates to the field of optical fiber cable and more specifically to a micro optical fiber cable for installation in micro ducts.

### BACKGROUND

Optical fiber cables have been increasingly employed for numerous industrial applications. One such type of optical fiber cable is micro optical fiber cables which are used for installation in micro ducts. These optical fiber cables include a small number of optical fibers. Also, the micro optical fiber cables have a small cable diameter which makes these cables suitable for installation in the micro ducts. Typically, the size of the micro ducts is 10 millimeter. Hence, a constant check is maintained on the diameter and weight of the micro optical fiber cables for smooth installation. Traditionally, the micro optical fiber cables are installed by blowing the optical fiber cable into a duct while simultaneously pushing the optical cable into the duct. The blowing is done by injecting a high volume of compressed air into the duct which flows inside the duct at high speed. Accordingly, the high speed propels the optical fiber cable into the duct. The optical fiber cables are blown with a cable blowing machine. Typically, the blowing performance of the cable blowing machine depends on the diameter and the weight of the micro optical fiber cable.

The currently available micro optical fiber cables have certain drawbacks. The existing micro optical fiber cables have bigger diameter due to which larger ducts are needed for installation. In addition, the existing micro optical fiber cables are heavy. This leads to a poor blowing performance from the cable blowing machine. The micro optical fiber cables do not support the existing duct designs.

In light of the above discussion, there exists a need for an optical fiber cable which overcomes the above cited drawbacks of conventionally known optical fiber cables.

### SUMMARY

The present disclosure seeks to provide an optical fiber cable.

The present disclosure also seeks to provide a micro optical fiber cable suitable for installation in micro ducts. In one aspect, an embodiment of the present disclosure provides an optical fiber cable. An optical fiber cable (100) comprising:
a central strength member (105) lying substantially along a longitudinal axis of the optical fiber cable (100);
one or more buffer tubes (110a-110f) stranded around the central strength member (105), each of the one or more buffer tubes (110a-110f) encloses 16 optical fibers and each of the optical fibers (115) has a diameter of about 250 microns;
a first layer (120) surrounding the one or more buffer tubes (110a-110f), the first layer (120) comprises one or more yarns and the first layer (120) binds the one or more buffer tubes (110a-110f); and
a second layer (125) surrounding the first layer (120),
characterized in that the optical fiber cable (100) has an outer diameter in a range of 5.6 - 6.0 millimeters and a weight of about 33 kilograms per kilometer.

Embodiments of the present disclosure substantially eliminate or at least partially address the aforementioned problems in the prior art, and provides an optical fiber cable that is easy to install in micro ducts. The optical fiber cable has a small diameter. Moreover, the optical fiber cable has a reduced weight. The small diameter and the reduced weight enable the easier installation of the optical fiber cable in the small ducts. The optical fiber cable can be installed in 8 mm/12mm ducts. Further, the small diameter and the reduced weight increases the blowing performance of the optical fiber cable. Furthermore, the optical fiber cable is a cable with a single layer construction. The single layer construction enables a decrease in manufacturing time for the optical fiber cable. Also, the single layer construction allows easier access to inner layers of the optical fiber cable during mid-spanning.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

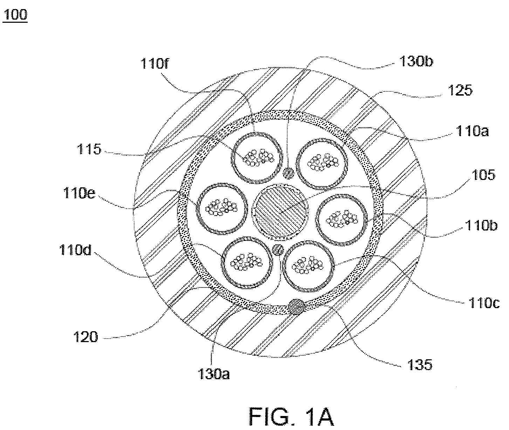

FIG. 1A illustrates a cross sectional view of an optical fiber cable, in accordance with an embodiment of the present disclosure; and

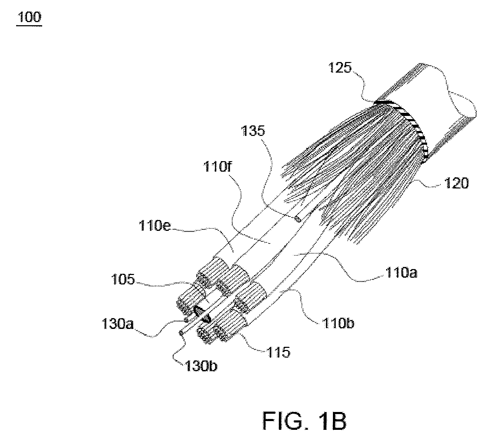

FIG. 1B illustrates a perspective view of the optical fiber cable of FIG. 1A, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides an optical fiber cable. The optical fiber cable includes a central strength member. The central strength member lies substantially along a longitudinal axis of the optical fiber cable. In addition, the optical fiber cable includes one or more buffer tubes stranded around the central strength member. Moreover, the optical fiber cable includes a first layer. The first layer surrounds the one or more buffer tubes. Further, the optical fiber cable includes a second layer. The second layer surrounds the first layer. Each of the one or more buffer tubes encloses 16 optical fibers. Each of the plurality of optical fibers has a diameter of about 250 microns. The first layer includes one or more yarns. In addition, the first layer binds the one or more buffer tubes. The optical fiber cable has an outer diameter in a range of 5.6 - 6.0 millimeters and a weight of about 33 kilograms per kilometer. Each buffer tube of the one or more buffer tubes has 16 optical fibers of about 250 microns diameter.

In an embodiment, the optical fiber cable is a micro optical fiber cable. The micro optical fiber cable is used for installation in micro ducts. The optical fiber cable is used for communication purposes. In an embodiment of the present disclosure, the optical fiber cable is a 96F micro optical fiber cable. In addition, 96F corresponds to 96 optical fibers. In an embodiment of the present disclosure, the optical fiber cable can include 16 optical fibers. In an embodiment, the optical fiber cable has a small diameter which makes the optical fiber cable suitable for installation in the micro ducts. In an embodiment, the optical fiber cable has a reduced cable weight. The optical fiber cable is a cable used for carrying light over long distances. Also, the optical fiber cable may simply be used to transmit optical signals (which may carry sensor data or communication data). The tensile strength of the optical fiber cable is about 700 Newton. Also, the optical fiber cable has an outer diameter in a range of 5.6 - 6.0 millimeters. Moreover, the optical fiber cable has a weight of about 33 kilograms per kilometer. In an embodiment of the present disclosure, the optical fiber cable has the weight in a range of 33 kilograms per kilometer ±10 percent. In an embodiment of the present disclosure, the reduced outer diameter and the reduced weight enables blowing of the optical fiber cable in the small ducts. In an embodiment, the optical fiber cable has a crush resistance of about 500 Newton. In an embodiment of the present disclosure, the core of the optical fiber cable has a diameter of about 4.9 millimeters.

In an embodiment, the optical fiber cable has a fill factor in a range of 80 percent to 90 percent. The fill factor of the optical fiber cable corresponds to a ratio of a cross section area of the optical fiber cable and ratio of a cross section area of the duct. In general, the optical fiber cable is installed in one or more ducts. In general, the micro ducts are small ducts for installation of small micro duct fiber optic cables. In an embodiment of the present disclosure, an inner diameter of micro ducts is 8 millimeter and an outer diameter of micro duct is 12 mm. In another embodiment of the present disclosure, the size of the micro ducts may be more or less than 8 millimeter. In an example, each of the one or ducts has a size present in a range of 3 millimeters to 16 millimeters. In general, each of the one or more ducts is a polyethylene duct. The one or more ducts are configured for installation of the micro optical fiber cable for long distances. The micro duct is flexible or semi-flexible. Further, the micro duct is designed to provide clean, continuous and low-friction paths for placing the optical fiber cable. In an example, each of the one or more ducts may be pre-lubricated by a manufacturer to avoid lubrication during the installation. In another example of the present disclosure, each of the one or more ducts is lubricated during the installation of the optical fiber cable. The one or more ducts have a low coefficient of friction for installation of the optical fiber cable over large distances.

In an embodiment, the optical fiber cable is installed inside the one or more ducts by a cable jetting technique. The cable jetting technique follows a cable blowing method for blowing the optical fiber cable inside a duct of the one or more ducts. The optical fiber cable is blown into the duct by using compressed air. The cable blowing is performed by utilizing special equipment produced by various manufacturers. The special equipment corresponds to a cable jetting machine or a cable blowing machine. The cable blowing machine utilizes high volume air compressors. Further, a blowing performance is based on the cable diameter and the cable weight of the optical fiber cable.

In an embodiment, length of installation of the optical fiber cable is based on reduction in friction. In general, the reduction in friction depends on a value of a coefficient of friction. The coefficient of friction is inversely proportional to the length of the installation of the optical fiber cable. In addition, the coefficient of friction should be small in order to increase the length of installation of the optical fiber cable.

The central strength member lies substantially along the longitudinal axis of the optical fiber cable. In an embodiment, the central strength member includes a steel wire located internally in the central strength member. In an embodiment, the central strength member is made of a fiber reinforced plastic. The fiber reinforced plastic is a composite material made of a polymer matrix reinforced with glass fibers. Examples of the fiber reinforced plastic include glass fiber, carbon fiber, aramid fiber and the like. In another embodiment of the present disclosure, the central strength member is made of any suitable material. In an embodiment of the present disclosure, the central strength member has a diameter of about 1.60 millimeter. In another embodiment of the present disclosure, the central strength member has the diameter in a range of 1.60 millimeter ± 0.1 millimeter. In yet another embodiment of the present disclosure, the diameter of the central strength member may vary.

In an embodiment, the central strength member provides tensile strength and stiffness to the optical fiber cable to facilitate blowing. The tensile strength corresponds to a resistance shown by the optical fiber cable against breaking when tension is applied. Moreover, the central strength member provides physical strength to the optical fiber cable and resists over bending of the optical fiber cable. Also, the central strength member prevents buckling of the optical fiber cable.

Each of the one or more buffer tubes is stranded around the central strength member to form a stranded core. In an embodiment, each of the one or more buffer tubes is a micro loose tube. Each of the one or more buffer tubes is a tube for encapsulating the plurality of optical fibers. In an embodiment of the present disclosure, the one or more buffer tubes is helically stranded around the central strength member. The helical stranding is turning of each of the one or more buffer tubes around the central strength member periodically in a pre-defined direction. The pre-defined direction is either a clockwise direction or an anticlockwise direction. In another embodiment of the present disclosure, the one or more buffer tubes is S-Z stranded around the central strength member. Moreover, the S-Z fashion of stranding is a form of stranding of the one or more buffer tubes. In addition, the S-Z stranding allows uniform distribution of the stress across all the one or more buffer tubes. The S-Z stranding may have any number of turns between the S-shape and the Z-shape. Each of the one or more buffer tubes are wound around the central strength member in sections with a first direction of winding in an S-shape alternating with the sections with a second direction of winding in a Z-shape. In an embodiment of the present disclosure, the first direction is a clockwise direction and the second direction is an anticlockwise direction. In an embodiment, the binding is performed to retain lay length of the one or more buffer tubes and uniform stress distribution along length of the optical fiber cable.

In an embodiment, the stranding of the one or more buffer tubes is performed in order to maintain a lay length. In general, the lay length is a longitudinal distance along length of the central strength member required for one buffer tube to go all the way around the central strength member. In an embodiment of the present disclosure, the lay length of the one or more buffer tubes is about 65 millimeter. In another embodiment of the present disclosure, the lay length of the one or more buffer tubes is in a range of 65 millimeter ± 5 millimeter. In yet another embodiment of the present disclosure, the lay length of the one or more buffer tubes may vary. In an embodiment, each of the one or more buffer tubes is hollow. In an embodiment, a cross section of each of the one or more buffer tubes is circular in shape. In an embodiment, each of the one or more buffer tubes is similar in structure and dimensions. In an embodiment of the present disclosure, a number of the one or more buffer tubes is 6. In another embodiment of the present disclosure, the number of the one or more buffer tubes may vary. In yet another embodiment of the present disclosure, the number of the one or more buffer tubes is less than 6.

In an embodiment, the thickness of each of the one or more buffer tubes is same. In an embodiment of the present disclosure, the thickness of each of the one or more buffer tubes is about 0.20 millimeter. In another embodiment of the present disclosure, the thickness of each of the one or more buffer tubes is in a range of 0.20 millimeter ± 0.05 millimeter. In yet another embodiment of the present disclosure, the thickness of each of the one or more buffer tubes may vary.

In an embodiment, an inner diameter and an outer diameter of each of the one or more buffer tubes is fixed. In an embodiment of the present disclosure, the inner diameter of each of the one or more buffer tubes is about 1.25 millimeter. In another embodiment of the present disclosure, the inner diameter of each of the one or more buffer tubes is in a range of 1.25 millimeter ± 0.05 millimeter. In yet another embodiment of the present disclosure, the inner diameter of each of the one or more buffer tubes may vary.

In an embodiment, the outer diameter of each of the one or more buffer tubes is about 1.65 millimeter. In another embodiment of the present disclosure, the outer diameter of each of the one or more buffer tubes is in a range of 1.65 millimeter ± 0.05 millimeter. In yet another embodiment of the present disclosure, the outer diameter of each of the one or more buffer tubes may vary.

Each of the one or more buffer tubes encloses the plurality of optical fibers. In addition, each of the one or more buffer tubes encloses 16 optical fibers. Each of the one or more buffer tubes surrounds the plurality of optical fibers. The one or more buffer tubes provides support and protection to each of the plurality of optical fibers against crush, bend and stretch. In addition, the one or more buffer tubes protects the plurality of optical fibers and prevents ingression of water inside. Further, the one or more buffer tubes provides mechanical isolation, physical damage protection and identification of each of the plurality of optical fibers. In an embodiment of the present disclosure, the one or more buffer tubes provides a single layer core construction.

In an embodiment, each of the one or more buffer tubes is colored. In an embodiment of the present disclosure, each of the one or more buffer tubes has a different color. In addition, total number of colors available for coloring the buffer tubes is 12. The coloring is done for identification of each of the one or more buffer tubes. The colors include blue, orange, green, brown, gray, white, red, black, yellow, violet, pink and aqua.

In an embodiment, each of the one or more buffer tubes is filled with a gel. The gel is a thixotropic gel. Also, the thixotropic gel is a viscous fluid or gel under static conditions and flow when shaken or agitated. In an embodiment of the present disclosure, the thixotropic gel is used for filling in empty spaces inside each of the one or more buffer tubes. In an embodiment of the present disclosure, the thixotropic gel prevents ingression of water inside each of the one or more buffer tubes.

In an embodiment, the one or more buffer tubes are replaced by one or more fillers when the number of the plurality of optical fibers is less than 96. In an example, the number of buffer tubes is 1 when the number of optical fibers is 16. In an embodiment of the present disclosure, the one or more buffer tubes is replaced by the one or more fillers for retaining geometry of the optical fiber cable. The one or more fillers are made of a material selected from a group. The group consists of polypropylene and nylon. The material is selected in order to avoid fusing of the one or more fillers with the HDPE jacket.

In an embodiment, each of the plurality of optical fibers is a fiber used for transmitting information as light pulses from one end to another. In addition, each of the plurality of optical fibers is a thin strand of glass or plastic capable of transmitting optical signals. Also, each of the plurality of optical fibers is configured to transmit large amounts of information over long distances with relatively low attenuation. Further, each of the plurality of optical fibers includes a core region and a cladding region. The core region is an inner part of an optical fiber and the cladding section is an outer part of the optical fiber. Moreover, the core region is defined by a central longitudinal axis of each of the plurality of optical fibers. In addition, the cladding region surrounds the core region. The core region and the cladding region are formed along the central longitudinal axis of each of the plurality of optical fibers. Moreover, the core region and the cladding region are formed during the manufacturing stage of each of the plurality of optical fibers. The core region has a refractive index which is greater than a refractive index of the cladding region. The core region has a higher refractive index than the cladding region.

Each of the optical fibers has a diameter of about 250 micron. In an embodiment, each of the plurality of optical fibers has a diameter in a range of 250 micron ± 3 micron. In another embodiment, the diameter of each of the plurality of optical fibers may vary. In an embodiment, each of the plurality of optical fibers is a single mode fiber. In another embodiment, each of the plurality of optical fibers is a multimode fiber. In an embodiment, a number of the plurality of optical fibers in each of the one or more buffer tubes is 16. The number of the plurality of optical fibers in each buffer tube may vary depending upon the cable requirements.

In an embodiment, a total number of the plurality of optical fibers in the optical fiber cable is 96 (16 fibers * 6 buffer tubes). In another embodiment, the total number of the plurality of optical fibers may be more or less than 96 depending upon the number of buffer tubes and the optical fibers in each buffer tube.

In an embodiment, each of the plurality of optical fibers is a colored optical fiber. In an embodiment of the present disclosure, each of the plurality of optical fibers has a different color. The total number of colors available for coloring the optical fibers is 12. The coloring is done for identification of each of the plurality of optical fibers. The colors include blue, orange, green, brown, gray, white, red, black, yellow, violet, pink and aqua. The color repeats when the number of the plurality of optical fibers exceeds more than 12. In an embodiment, a number of optical fibers with same color in each of the one or more buffer tubes are 2.

The first layer surrounds the one or more buffer tubes. The first layer includes one or more yarns. In addition, the first layer binds the one or more buffer tubes. In an embodiment, the first layer acts as a binding element for the one or more buffer tubes. In an embodiment, each of the one or more yarns is a binder yarn. The binder yarn is made of a material selected from a group. The group consists of polyester, aramid and polypropylene. In an embodiment of the present disclosure, each of the one or more yarns is a yarn thread. In an embodiment of the present disclosure, the binder yarn facilitates absorption of water and moisture. In addition, each of the one or more yarns prevents ingression of the water inside the optical fiber cable. In an embodiment of the present disclosure, the optical fiber cable may have any number of yarn threads. In an embodiment, the first layer binds the stranded one or more buffer tubes to prevent opening up of the S-Z stranded one or more buffer tubes. In an embodiment, the first layer provides retention of the lay length of the one or more buffer tubes. In an embodiment, the first layer acts as a strengthening element for the one or more buffer tubes.

The second layer surrounds the first layer. In an embodiment, the second layer is made of a material selected from a group. The group consists of polyamides, polyethylene and polypropylene. In another embodiment, the second layer is made of any suitable material. In an embodiment of the present disclosure, the second layer is a high density polyethylene (HDPE) jacket. The second layer is characterized by a thickness.

In an embodiment, the second layer has a thickness of about 0.45 millimeter. In another embodiment, the second layer has the thickness in the range of 0.45 millimeter ± 0.05 millimeter. In yet another embodiment, the thickness of the second layer may vary. In an embodiment of the present disclosure, the second layer is black in color. In another embodiment of the present disclosure, the second layer may be of any color. The second layer layer interacts directly with ambient environment. In addition, the second layer is a sheathing layer. The second layer protects the optical fiber cable against the crush, the bend and tensile stress along the length of the optical fiber cable.

According to an embodiment, the plurality of water swellable yarns is positioned between the one or more buffer tubes. The plurality of water swellable yarns prevents ingression of water in the stranded core of the optical fiber cable. In an embodiment, the number of the plurality of water swellable yarns is 2. In another embodiment, the number of the plurality of water swellable yarns may vary.

According to an embodiment, the one or more ripcords are placed between the first layer and the second layer. The one or more ripcords lie substantially along the longitudinal axis of the optical fiber cable. The one or more ripcords facilitate stripping of the second layer. In an embodiment of the present disclosure, the one or more ripcords are made of a polyester material. In another embodiment of the present disclosure, the one or more ripcords are made of any suitable material. In an embodiment of the present disclosure, each of the one or more ripcords has circular cross-section. In an embodiment of the present disclosure, a number of the one or more ripcords are 1. In another embodiment of the present disclosure, the number of the one or more ripcords may vary.

According to an embodiment, the peripheral strength member is made of aramid yarns. In an embodiment, the peripheral strength member is located between the first layer and the second layer.

### DETAILED DESCRIPTION

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

Referring now to the drawings, particularly by their reference numbers, **FIG. 1A** illustrates a cross-sectional view of an optical fiber cable **100** for installation in micro ducts, in accordance with an embodiment of the present disclosure. The optical fiber cable **100** includes a central strength member **105,** one or more buffer tubes **110a-110f,** a plurality of optical fibers **115,** a first layer **120** and a second layer **125** (as seen in **FIG. 1A** in conjunction with the perspective view of the optical fiber cable **100** provided in **FIG. 1B****).** In addition, the optical fiber cable **100** includes a plurality of water swellable yarns **130a-130b** and a ripcord **135.** The central strength member **105** lies substantially along a longitudinal axis of the optical fiber cable **100.** The one or more buffer tubes **110a-110f** is stranded around the central strength member **105** to form a stranded core. In addition, each of the one or more buffer tubes **110a-110f** encloses the plurality of optical fibers **115.** Further, the first layer **120** surrounds the one or more buffer tubes **110a-110f.** Moreover, the first layer **120** binds the one or more buffer tubes **110a-110f.** Furthermore, the second layer **125** surrounds the first layer **120.** The plurality of water swellable yarns **130a-130b** is positioned between the one or more buffer tubes **110a-110f.** Also, the ripcord **135** is placed between the first layer **120** and the second layer **125.**

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An optical fiber cable (100) comprising:
a central strength member (105) lying substantially along a longitudinal axis of the optical fiber cable (100);
one or more buffer tubes (110a-110f) stranded around the central strength member (105), each of the one or more buffer tubes (110a-110f) encloses 16 optical fibers and each of the optical fibers (115) has a diameter of about 250 microns;
a first layer (120) surrounding the one or more buffer tubes (110a-110f), the first layer (120) comprises one or more yarns and the first layer (120) binds the one or more buffer tubes (110a-110f); and
a second layer (125) surrounding the first layer (120),
**characterized in that** the optical fiber cable (100) has an outer diameter in a range of 5.6 - 6.0 millimeters and a weight of about 33 kilograms per kilometer.

2. The optical fiber cable according to claim 1, further comprising:
a plurality of water swellable yarns (130a-130b) positioned between the one or more buffer tubes (110a-110f), **characterized in that** the plurality of water swellable yarns (130a-130b) prevent ingression of water inside a stranded core of the optical fiber cable (100) and the core of the optical fiber cable (100) has a diameter of about 4.9 millimeters.

3. The optical fiber cable (100) according to claim 1, further comprising:
one or more ripcords (135) placed between the first layer (120) and the second layer (125) and lying substantially along the longitudinal axis of the optical fiber cable (100), **characterized in that** the one or more ripcords (135) facilitate stripping of the second layer (125).

4. The optical fiber cable (100) according to claim 1, **characterized in that** the central strength member (105) comprises a steel wire located internally in the central strength member (105), the central strength member (105) provides tensile strength stiffness to the optical fiber cable (100) to facilitate blowing, the tensile strength of the optical fiber cable (100) is about 700 Newton and the central strength member (105) has a diameter of about 1.60 millimeter.

5. The optical fiber cable (100) according to claim 1, **characterized in that** the central strength member (105) is made of a fiber reinforced plastic.

6. The optical fiber cable (100) according to claim 1, further comprising:
a peripheral strength member and **characterized in that** the peripheral strength member is made of aramid yarns.

7. The optical fiber cable (100) according to claim 1, **characterized in that** each of the one or more yarns is a binder yarn and the binder yarn is made of a material selected from a group consisting of polyester, aramid and polypropylene.

8. The optical fiber cable (100) according to claim 1, **characterized in that** each of the one or more buffer tubes (110a-110f) is filled with a gel, the gel is a thixotropic gel and the thixotropic gel prevents ingression of water in the one or more buffer tubes (110a-110f).

9. The optical fiber cable (100) according to claim 1, **characterized in that** the one or more buffer tubes (110a-110f) is S-Z stranded around the central strength member (105), each of the one or more buffer tubes (110a-110f) are wound around
the central strength member (105) in sections with a first direction of winding in an S-shape alternating with the sections with a second direction of winding in a Z-shape and the first direction is a clockwise direction and the second direction is an anticlockwise direction.

10. The optical fiber cable (100) according to claim 1, **characterized in that** the second layer (125) is made of a material selected from a group consisting of polyamides, polyethylene and polypropylene and the second layer (125) has a thickness of about 0.45 millimeter.

11. The optical fiber cable (100) according to claim 1, **characterized in that** each of the optical fibers (115) is a colored optical fiber.

12. The optical fiber cable (100) according to claim 1, **characterized in that** each of the one or more buffer tubes (110a-110f) has an inner diameter of about 1.25 millimeters, an outer diameter of about 1.65 millimeters, a thickness of about 0.20 millimeter and a lay length of about 65 millimeters.

13. The optical fiber cable (100) according to claim 1, **characterized in that** the optical fiber cable (100) has a crush resistance about 500 Newton.

14. The optical fiber cable (100) according to claim 1, **characterized in that** the optical fiber cable (100) comprises six buffer tubes.

15. The optical fiber cable (100) according to claim 1, **characterized in that** the one or more buffer tubes (110a-110f) are replaced by one or more fillers, the one or more buffer tubes (110a-110f) are replaced when a number of the optical fibers (115) is less than 96 and the one or more fillers is made of a material selected from a group consisting of polypropylene and nylon.

16. The optical fiber cable (100) according to claim 1, **characterized in that** the optical fiber cable (100) has a fill factor in a range of 80 percent to 90 percent.
